# EUROPÄISCHE PATENTSCHRIFT

(11) **EP 1 927 870 B1**
(45) Veröffentlichungstag und Bekanntmachung des Hinweises auf die Patenterteilung: **03.04.2013**
(21) Anmeldenummer: 07022086.8
(22) Anmeldetag: 14.11.2007
(51) Int. Cl.: G06K 7/00, G06K 19/07, G06K 19/073, G01V 15/00, G11C 7/24, G11C 8/20, G11C 16/22, G07F 7/10

(54) **Tragbarer Datenträger**
Portable data carrier
Support de données portatif

(30) Priorität: 21.11.2006 DE 102006054835
(43) Veröffentlichungstag der Anmeldung: 04.06.2008
(73) Patentinhaber: Giesecke & Devrient GmbH, 81677 München (DE)
(72) Erfinder: Rankl, Wolfgang, 81825 München (DE)

(56) Entgegenhaltungen:
- EP-A- 0 360 878
- DE-A1- 10 162 308
- US-A- 5 446 864
- US-A- 5 749 088
- US-A- 5 974 500
- US-A- 6 094 724
- US-B1- 6 674 599

## Beschreibung

Die Erfindung betrifft einen tragbaren Datenträger. Weiterhin betrifft die Erfindung ein Betriebssystem für einen tragbaren Datenträger und ein Verfahren zum Betreiben eines tragbaren Datenträgers.

Tragbare Datenträger, die insbesondere als Chipkarten ausgebildet sein können, werden beispielsweise im Bereich des Zahlungsverkehrs, im Mobilfunkbereich, als Ausweisdokumente, als sonstige Sicherheitsdatenträger usw. eingesetzt. Je nach Anwendungsfall können tragbare Datenträger sehr einfach ausgebildet sein und lediglich über einen Speicher verfügen oder als ein vergleichsweise komplexes System mit einem Mikroprozessor, der mittels eines Betriebssystems betrieben wird.

Es kann mitunter vorkommen, dass ein tragbarer Datenträger als Beweismittel benötigt wird. Beispielsweise kann es erforderlich sein, auf dem tragbaren Datenträger Bezahl- oder Ladeprotokolle, angerufene Telefonnummern usw. zu ermitteln. Diese Daten können über eine Schnittstelle des tragbaren Datenträgers beispielsweise gemäß dem T=0 oder dem T=1 Protokoll ausgelesen werden.

Die ausgelesenen Daten können allerdings nur dann eine Beweiskraft entfalten, wenn gewährleistet ist, dass die Daten seit dem Sicherstellen des tragbaren Datenträgers, besser noch seit dem Zeitpunkt, für den der Nachweis geführt werden soll, nicht mehr geändert wurden. Somit ist insbesondere auch sicherzustellen, dass im Rahmen des Ausleseprozesses keine Änderungen an den Daten vorgenommen werden.

In US 6674599 wird der Speicher für den Benutzer irreversibel in einen beschreibbaren und einen schreibgeschützten Bereich unterteilt.

Es ist bekannt einzelne wieder beschreibbare Speicherbereiche auf Chipkarten durch irreversibel auslösbare (Schmelz-)Sicherungen gegen Änderungen zu schützen (US 6094724, US 5446864 oder DE 10162308). Lesezugriffe auf den gesperrten Speicherbereich und Schreibzugriffe auf den Benutzerbereich sind in US 6094724 auch nach der Sperrung weiterhin möglich.

Der Erfindung liegt die Aufgabe zugrunde, in einem nichtflüchtigen Speicher eines tragbaren Datenträgers gespeicherte Daten zu konservieren, so dass sichergestellt ist, dass zumindest ab dem Zeitpunkt der Konservierung keine Änderungen an den Daten vorgenommen wurden und die gespeicherten Daten insbesondere auch beim Auslesen des Speichers nicht geändert werden.

Diese Aufgabe wird durch den Gegenstand der unabhängigen Ansprüche gelöst.

Der erfindungsgemäße tragbare Datenträger weist eine Prozessoreinheit und einen beschreibbaren nichtflüchtigen Speicher auf. Die Besonderheit des erfindungsgemäßen tragbaren Datenträgers besteht darin, dass eine durch ein vorgegebenes Sperrereignis irreversibel aktivierbare Sperrfunktionalität zur selektiven Sperrung von Schreibzugriffen auf den nichtflüchtigen Speicher vorgesehen ist, derart, dass Schreibzugriffe, die eine vorgegebene Ausnahmebedingung erfüllen und Lesezugriffe durch die Sperrung nicht unterbunden werden.

Dabei ist unter einem Schreibzugriff im Sinne der Erfindung jeder Zugriff auf den nichtflüchtigen Speicher zu verstehen, der den Speicherinhalt ändert. Eine Löschoperation stellt somit auch einen Schreibzugriff im Sinne der Erfindung dar.

Die Erfindung hat den Vorteil, dass sie ein definiertes Konservieren des Speicherinhalts eines nichtflüchtigen Speichers eines tragbaren Datenträgers mit hoher Beweiskraft ermöglicht und dabei die Zugänglichkeit des Speicherinhalts für einen lesenden Zugriff nicht beeinträchtigt. Ein weiterer Vorteil besteht darin, dass Schreibzugriffe auf den nichtflüchtigen Speicher unter bestimmten Bedingungen weiterhin möglich sind.

Der tragbare Datenträger kann so ausgebildet sein, dass die Sperrfunktionalität vom Inhaber des tragbaren Datenträgers aktivierbar ist. Dies ermöglicht es dem Inhaber beispielsweise, beim Auftreten einer Unstimmigkeit den Speicherinhalt einzufrieren, so dass eine spätere Beweisführung erleichtert wird. Ebenso kann auch vorgesehen sein, dass die Sperrfunktionalität von einem Dienstanbieter aktivierbar ist, zu dessen Diensten mittels des tragbaren Datenträgers Zugang erlangt werden kann. Auch bei dieser Variante wird eine ggf. erforderliche Beweisführung erleichtert.

Insbesondere um einen Missbrauch durch Dritte zu verhindern, kann vorgesehen sein, dass für die Aktivierung der Sperrfunktionalität eine korrekte Eingabe einer Geheiminformation erforderlich ist. Zusätzlich oder alternativ dazu kann für die Aktivierung der Sperrfunktionalität eine erfolgreiche Authentisierung erforderlich sein.

Bei einem bevorzugten Ausführungsbeispiel des tragbaren Datenträgers ist die Sperrfunktionalität mittels einer Software realisiert. Dies hat den Vorteil, dass die Hardware unverändert beibehalten werden kann und somit der Aufwand für die Realisierung der Erfindung vergleichsweise gering ist. Insbesondere kann die Sperrfunktionalität ein Bestandteil eines Betriebssystems des tragbaren Datenträgers sein. Einen besonders geringen Realisierungsaufwand erfordert ein Ausführungsbeispiel des tragbaren Datenträgers, bei dem die Sperrfunktionalität einen Zugriff auf eine Schreibroutine, mit der ein Schreibzugriff auf den nichtflüchtigen Speicher durchführbar ist, einschränkt.

Der tragbare Datenträger kann so ausgebildet sein, dass die vorgegebene Ausnahmebedingung erfüllt ist, wenn der Schreibzugriff auf einen vorgegebenen Speicherbereich des nichtflüchtigen Speichers erfolgt. Dies entspricht einer Teilkonservierung des nichtflüchtigen Speichers. Erfindungsgemäß ist vorgesehen, dass die vorgegebene Ausnahmebedingung beim Einschreiben eines Werts für einen Fehlbedienungszähler erfüllt ist. Auf diese Weise ist der Fehlbedienungszähler auch nach einer Konservierung des nichtflüchtigen Speichers weiterhin verfügbar. Dies erleichtert beispielsweise das Auslesen des konservierten nichtflüchtigen Speichers, da für eine Inbetriebnahme des tragbaren Datenträgers in vielen Fällen ein funktionsfähiger Fehlbedienungszähler benötigt wird.

Bei einem bevorzugten Ausführungsbeispiel des tragbaren Datenträgers ist eine Protokollfunktionalität vorgesehen, die nach Ablauf eines vorgegebenen Zeitintervalls oder beim Auftreten eines Protokollereignisses eine Zeitangabe in den nichtflüchtigen Speicher einschreibt. Dabei ist es besonders vorteilhaft, wenn die Zeitangabe kryptographisch gesichert ist. Dadurch kann eine Manipulation der Zeitangabe verhindert werden, so dass die Zeitangabe in eine Beweisführung einbezogen werden kann. Eine besonders hohe Beweiskraft kommt der Zeitangabe zu, wenn sie von einer vertrauenswürdigen Einrichtung erzeugt und gesichert wird. Es ist deshalb von Vorteil, wenn die Protokollfunktionalität für einen Empfang der Zeitangabe von einer vertrauenswürdigen Einrichtung ausgelegt ist.

Die Protokollfunktionalität protokolliert vorzugsweise die Anzahl der Schreibzugriffe auf den nichtflüchtigen Speicher jeweils seit der letzten Zeitangabe. Dabei ist es besonders vorteilhaft, wenn die Protokollfunktionalität wenigstens zwei Kategorien von Schreibzugriffen auf den nichtflüchtigen Speicher separat protokolliert. Dadurch wird die Möglichkeit einer spezifischen Auswertung der Schreibzugriffe geschaffen. Insbesondere kann eine Kategorie von Schreibzugriffen auf den nichtflüchtigen Speicher Schreibzugriffe betreffen, die bei Erfüllung der vorgegebenen Ausnahmebedingung durchgeführt werden. Durch diese Unterscheidung ist im nachhinein feststellbar, ob zusätzlich zu den gemäß der vorgegeben Ausnahmebedingung vorgesehen Schreibzugriffen weitere Schreibzugriffe stattgefunden haben. Beispielsweise kann ermittelt werden, ob zusätzlich zu einer Aktualisierung des Fehlbedienungszählers weitere Schreibzugriffe stattfanden.

Der tragbare Datenträger ist vorzugsweise als eine Chipkarte ausgebildet.

Das Betriebssystem eines tragbaren Datenträgers, der eine Prozessoreinheit und einen beschreibbaren nichtflüchtigen Speicher aufweist, zeichnet sich dadurch aus, dass es eine durch ein vorgegebenes Sperrereignis irreversibel aktivierbare Sperrfunktionalität zur selektiven Sperrung von Schreibzugriffen auf den nichtflüchtigen Speicher aufweist, derart, dass Schreibzugriffe, die eine vorgegebene Ausnahmebedingung erfüllen und Lesezugriffe durch die Sperrung nicht unterbunden werden.

Zudem bezieht sich die Erfindung auf ein Verfahren zum Betreiben eines tragbaren Datenträgers, der eine Prozessoreinheit und einen beschreibbaren nichtflüchtigen Speicher aufweist. Die Besonderheit des erfindungsgemäßen Verfahrens besteht darin, dass Schreibzugriffe auf den nichtflüchtigen Speicher auf ein vorgegebenes Sperrereignis hin irreversibel und selektiv derart gesperrt werden, dass Schreibzugriffe, die eine vorgegebene Ausnahmebedingung erfüllen und Lesezugriffe durch die Sperrung nicht unterbunden werden.

Die Erfindung wird nachstehend anhand der in der Zeichnung dargestellten Ausführungsbeispiele erläutert. Dabei ist der tragbare Datenträger jeweils als Chipkarte ausgebildet. Die Erfindung bezieht sich gleichermaßen auch auf andersartig ausgebildete tragbare Datenträger. Insbesondere ist als ein tragbarer Datenträger im Sinn der Erfindung ein Rechnersystem anzusehen, bei dem die Ressourcen, d. h. Speicherressourcen und/oder Rechenkapazität (Rechenleistung) begrenzt sind, z. B. eine Chipkarte (Smart Card, Mikroprozessor-Chipkarte) oder ein Token oder ein Chipmodul zum Einbau in eine Chipkarte oder in ein Token. Der tragbare Datenträger kann eine beliebige standardisierte oder nicht standardisierte Gestalt haben, beispielsweise die Gestalt einer flachen Chipkarte ohne Norm oder nach einer Norm wie z.B. ISO 7810 (z.B. ID-1, ID-00, ID-000) oder die eines volumigen Tokens.

Es zeigen:
- Fig. 1: ein stark vereinfachtes Blockschaltbild für ein Ausführungsbeispiel einer Hardware einer Chipkarte gemäß der Erfindung,
- Fig. 2: ein Ausführungsbeispiel für die Architektur der Chipkarte in einer stark vereinfachten Darstellung,
- Fig. 3: ein Ablaufdiagramm zur Veranschaulichung einer Variante eines Verfahrens zum Betreiben der Chipkarte,
- Fig. 4: ein Ausführungsbeispiel für den Aufbau der Protokolldatei und
- Fig. 5: ein weiteres Ausführungsbeispiel für den Aufbau der Protokolldatei.

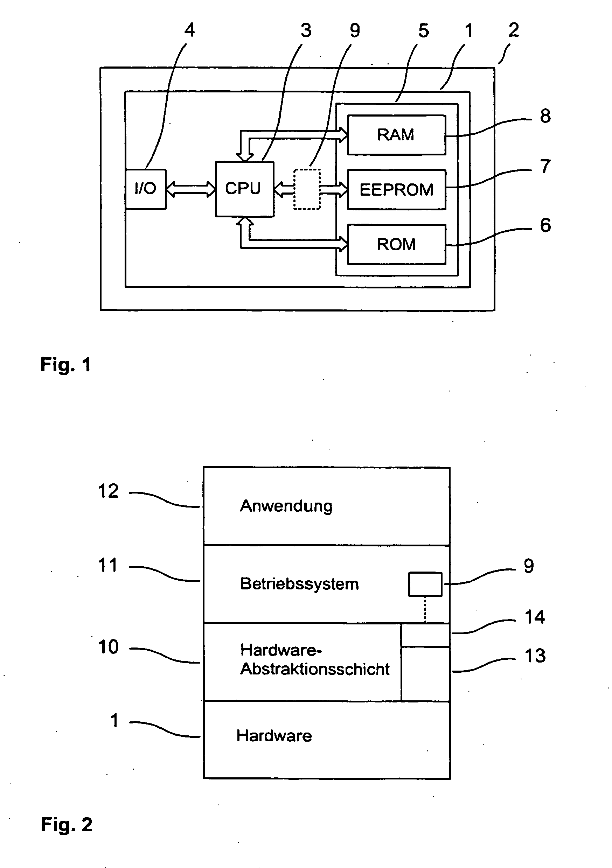

Fig. 1 zeigt ein stark vereinfachtes Blockschaltbild für ein Ausführungsbeispiel einer Hardware 1 einer Chipkarte 2 gemäß der Erfindung. Die Hardware 1 ist in der Regel als ein integrierter Schaltkreis, insbesondere als ein Mikroprozessor, ausgebildet und verfügt über eine Reihe von Funktionskomponenten, von denen einige in Fig. 1 dargestellt sind und im Folgenden näher erläutert werden.

Die Hardware 1 weist eine Prozessoreinheit 3 auf, welche die Funktionsabläufe der Chipkarte 2 steuert und auch als Central Processing Unit, abgekürzt CPU, bezeichnet wird. Weiterhin weist die Hardware 1 eine Schnittstelle 4 zur Ein- und Ausgabe von Daten und einen Speicher 5 auf. Beim dargestellten Ausführungsbeispiel besteht der Speicher 5 aus einem Permanentspeicher 6, einem nichtflüchtigen Speicher 7 und einem flüchtigen Speicher 8. Alternativ dazu ist auch ein anderer Aufbau des Speichers 5 möglich. Die Prozessoreinheit 3 ist mit der Schnittstelle 4, dem Permanentspeicher 6, dem nichtflüchtigen Speicher 7 und dem flüchtigen Speicher 8 verbunden.

Die Schnittstelle 4 dient der Kommunikation mit externen Geräten, die durch eine berührende Kontaktierung der Chipkarte 2 und/oder kontaktlos abgewickelt werden kann. Die Datenübertragung kann beispielsweise gemäß dem T=1 oder dem T=0 Protokoll erfolgen.

Im Permanentspeicher 6 sind Daten abgelegt, die während der gesamten Lebensdauer der Chipkarte 2 unverändert erhalten bleiben, beispielsweise Programme, Parameter, personenbezogene Angaben, Schlüssel usw. Insbesondere ist im Permanentspeicher 6 ein Betriebssystem der Chipkarte 2 gespeichert.

Der flüchtige Speicher 8 dient als Arbeitsspeicher für die Prozessoreinheit 3, so dass geheime Daten beispielsweise bei der Durchführung von Berechnungen im flüchtigen Speicher 8 zwischengespeichert werden. Im flüchtigen Speicher 8 bleibt der Speicherinhalt nur solange erhalten, wie die Chipkarte 2 mit einer Betriebsspannung versorgt wird.

Der nichtflüchtige Speicher 7 kann während der Lebensdauer der Chipkarte 2 immer wieder neu beschrieben werden. Der jeweilige Speicherinhalt bleibt auch dann erhalten, wenn die Chipkarte 2 nicht mit der Betriebsspannung versorgt wird. Im nichtflüchtigen Speicher 7 sind beispielsweise Ergänzungen zum Betriebssystem, Anwendungssoftware, Schlüssel, Informationen zu einem Fehlbedienungszähler, personenbezogene Daten, Telefonnummern, Transaktionsdaten usw. abgelegt.

In Fig. 1 ist weiterhin eine Schreibsperre 9 eingezeichnet, mit welcher der Schreibzugriff der Prozessoreinheit 3 auf den nichtflüchtigen Speicher 7 unterbrochen werden kann. Demgemäß ist die Schreibsperre 9 in den Verbindungspfad zwischen der Prozessoreinheit 3 und dem nichtflüchtigen Speicher 7 eingezeichnet. Da die Schreibsperre 9 vorzugsweise in Form einer Software realisiert ist, erfolgt die Darstellung der Schreibsperre 9 in Fig. 1 mittels gestrichelter Linien. Wie im Folgenden noch näher erläutert wird, kann mit der Schreibsperre 9 das Einschreiben von Daten in den nichtflüchtigen Speicher 7 beeinflusst werden. Einschreiben ist dabei allgemein im Sinne eines Zugriffs zu verstehen, durch den der Speicherinhalt verändert wird und umfasst das Eintragen von Daten in einen leeren Speicherbereich, das Überschreiben von vorhandenen Daten mit anderen Daten und das Löschen von vorhandenen Daten.

Fig. 2 zeigt ein Ausführungsbeispiel für die Architektur der Chipkarte 2 in einer stark vereinfachten Darstellung. Die Darstellung beruht auf dem Schichtenmodell, bei dem die Architektur der Chipkarte 2 durch übereinander angeordnete Schichten repräsentiert wird. Gemäß Fig. 2 sind eine Schicht zur Darstellung der Hardware 1, eine Hardware-Abstraktionsschicht 10 (Hardware Abstraction Layer HAL), eine Schicht für ein Betriebssystem 11 und eine Schicht für wenigstens eine Anwendung 12 vorgesehen, die in dieser Reihenfolge übereinander angeordnet sind.

Weiterhin ist in Fig. 2 die Schreibsperre 9 innerhalb der Schicht des Betriebssystems 11 dargestellt. Innerhalb der Hardware-Abstraktionsschicht 10 sind eine Schreibroutine 13 zum Schreiben von Daten in den nichtflüchtigen Speicher 7 und eine der Schreibroutine 13 zugeordnete Schnittstelle 14, die auch als Application Programming Interface API bezeichnet wird, dargestellt.

Das Betriebssystem 11 ist weitgehend hardwareunabhängig ausgebildet. Ein Zugriff des Betriebssystems 11 auf die Hardware 1 erfolgt über die Hardware-Abstraktionsschicht 10. Die Hardware-Abstraktionsschicht 10 ist eine Software, die auf die Hardware 1 abgestimmt ist und einen Zugriff auf die Hardware 1 ermöglicht. Dieser Zugriff kann insbesondere vom Betriebssystem 11 initiiert werden, das jedoch infolge der zwischengeschalteten Hardware-Abstraktionsschicht 10 nicht im Einzelnen auf die Hardware 1 abgestimmt sein muss. Dadurch ist es möglich, das gleiche Betriebssystem 11 für unterschiedliche Hardware-Ausführungen einzusetzen.

Die Ausführung der Anwendung 12 wird vom Betriebssystem 11 abgewickelt. Dabei gegebenenfalls erforderliche Zugriffe auf die Hardware 1 erfolgen über die Hardware-Abstraktionsschicht 10. Insbesondere kann im Rahmen der Anwendung 12 vorgesehen sein, Daten in den nichtflüchtigen Speicher 7 einzuschreiben. Hierzu ruft das Betriebssystem 11 über die Schnittstelle 14 die Schreibroutine 13 auf. Im Rahmen der Erfindung besteht die Möglichkeit, mit Hilfe der Schreibsperre 9 die Schreibroutine 13 selektiv und irreversibel außer Funktion zu setzen und dadurch zukünftige Schreibzugriffe auf den nichtflüchtigen Speicher 7 zu verhindern. Dies kann beispielsweise dadurch geschehen, dass die Schnittstelle 14 durch eine Einwirkung der Schreibsperre 9 blockiert wird und somit ein Zugriff auf die Schreibroutine 13 unterbunden wird. Die Einwirkung der Schreibsperre 9 auf die Schnittstelle 14 ist in Fig. 2 durch eine gestrichelte Linie dargestellt.

Das außer Funktion Setzen der Schreibroutine 13, das im Folgenden auch als Stilllegung bezeichnet wird, bedeutet, dass der zum Zeitpunkt der Stilllegung der Schreibroutine 13 vorhandene Dateninhalt des nichtflüchtigen Speichers 7 "eingefroren" wird und es nicht mehr möglich ist, Daten zu löschen, zu ändern oder zu ergänzen. Die Stilllegung der Schreibroutine 13 hat ausschließlich Auswirkungen auf das Beschreiben des nichtflüchtigen Speichers 7. Für einen Lesezugriff wird die Schreibroutine 13 nicht benötigt, so dass ein Lesezugriff auch nach Stilllegung der Schreibroutine 13 weiterhin möglich ist. Die Information über die Stilllegung kann von außerhalb der Chipkarte 2 abgefragt werden, so dass bekannt ist, ob und wann die Chipkarte 2 stillgelegt wurde.

Im Rahmen der Erfindung ist vorgesehen, die Schreibroutine 13 nicht global stillzulegen, sondern eine selektive Stilllegung vorzunehmen, so dass bestimmte Schreiboperationen weiterhin möglich sind. Insbesondere kann vorgesehen sein, dass Informationen über den Fehlbedienungszähler auch nach Stilllegung der Schreibroutine 13 weiterhin in den nichtflüchtigen Speicher 7 eingeschrieben werden können. Ebenso kann vorgesehen sein, dass vom Betriebssystem 11 oder im Falle einer als JAVA-Karte ausgebildeten Chipkarte 2 von einer virtuellen Maschine initiierte Schreibzugriffe weiterhin zugelassen werden. Hierunter sind jedoch nicht die Schreibzugriffe zu verstehen, die von der Anwendung 12 initiiert werden und vom Betriebssystem 11 bzw. der virtuellen Maschine lediglich umgesetzt werden. Weiterhin können auch Schreibzugriffe auf einen vorgegebenen Bereich des nichtflüchtigen Speichers 7 nach Stilllegung der Schreibroutine 13 weiterhin zugelassen werden.

Die Stilllegung der Schreibroutine 13 kann auf unterschiedliche Weise veranlasst werden. Beispielsweise kann die Schreibsperre 9 so ausgebildet werden, dass sie auf ein Kommando, das der Chipkarte 2 von einem nicht figürlich dargestellten externen Gerät übermittelt wird, die Stilllegung der Schreibroutine 13 veranlasst. Dadurch ist es zum Beispiel dem Inhaber der Chipkarte 2 möglich, die im nichtflüchtigen Speicher 7 der Chipkarte 2 vorhandenen Daten manipulationssicher zu konservieren. Hierzu ist lediglich ein Chipkartenleser erforderlich, mit dessen Hilfe Daten eingegeben und an die Chipkarte 2 übermittelt werden können. Um eine versehentliche oder missbräuchliche Stilllegung der Schreibroutine 13 zu unterbinden, kann vorgesehen werden, dass die Stilllegung erst nach einer erfolgreichen Eingabe einer persönlichen Geheimzahl (Personal Idendification Number PIN) durchgeführt wird. Weiterhin besteht die Möglichkeit, die Stilllegung nur dann durchzuführen, wenn zuvor eine erfolgreiche Authentisierung des Inhabers erfolgt ist, der die Stilllegung veranlasst. Es ist auch möglich, sowohl eine Authentisierung als auch eine Überprüfung einer eingegebenen Geheimzahl durchzuführen.

Im Falle einer Chipkarte 2, die in einem Mobilfunktelefon eingesetzt wird, ist die Stilllegung der Schreibroutine 13 auch über die Luftschnittstelle des Mobilfunktelefons möglich. Hierzu übermittelt der Netzbetreiber eine entsprechende Nachricht "Over The Air" an die Chipkarte 2. Nach der Stilllegung der Schreibroutine 13 übermittelt der Netzbetreiber einen kryptographischen Schlüssel, insbesondere einen Personal Unblocking Key PUK an die Instanz, beispielsweise eine Behörde, die den Inhalt des nichtflüchtigen Speichers 7 der Chipkarte 2 auslesen möchte. Mit Hilfe des Schlüssels kann eine neue PIN erzeugt werden. Die PIN kann dann zum Auslesen der Daten herangezogen werden, die dem Inhaber zugänglich sind. Dabei können für sich bekannte Kommandos wie beispielsweise "READ BINARY", "READ RECORD", "GET DATA" usw. zum Einsatz kommen.

Wie bereits erwähnt kann die Durchführung der Stilllegung der Schreibroutine 13 beispielsweise dadurch erfolgen, dass die Schnittstelle 14 blockiert wird und somit kein Zugriff mehr auf die Schreibroutine 13 möglich ist. Die Stilllegung erfolgt irreversibel, damit die im nichtflüchtigen Speicher 7 der Chipkarte 2 abgelegten Daten eine hohe Beweiskraft haben. Bei der Stilllegung kann der Zeitpunkt der Stilllegung in den nichtflüchtigen Speicher 7 eingeschrieben werden, damit nachträglich nachvollziehbar ist, ab welchem Zeitpunkt im nichtflüchtigen Speicher 7 definitiv keine Änderung mehr erfolgte. Bezüglich der Zeit vor der Stilllegung können allerdings keine Aussagen über etwaige Änderungen des Speicherinhalts getroffen werden. Es besteht jedoch die Möglichkeit, die Erfindung so weiterzubilden, dass auch Aussagen zu etwaigen Änderungen in der Zeit vor der Stilllegung der Schreibroutine 13 möglich sind. Dies wird im Folgenden näher beschrieben.

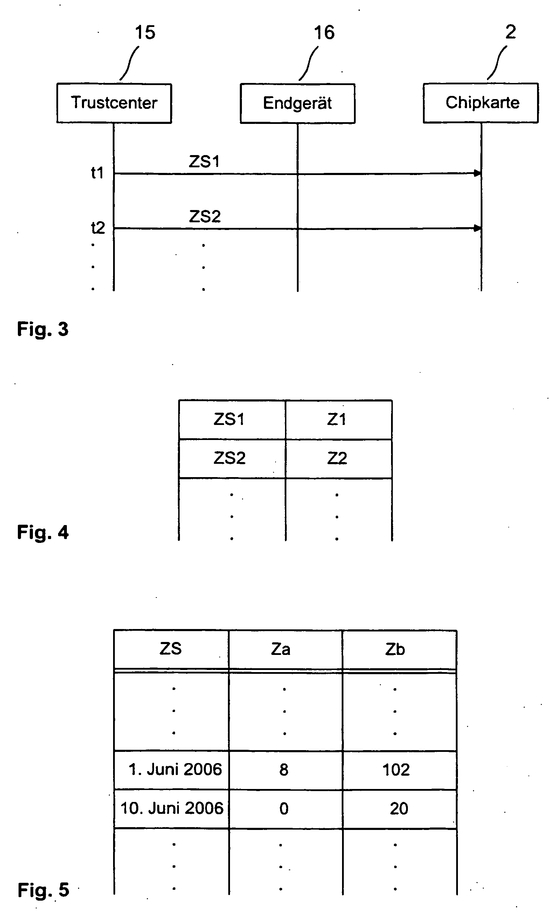

Fig. 3 zeigt ein Ablaufdiagramm zur Veranschaulichung einer Variante eines Verfahrens zum Betreiben der Chipkarte 2.

In Fig. 3 sind von links nach rechts ein Trustcenter 15, ein Endgerät 16 und die Chipkarte 2 dargestellt.

Der Trustcenter 15 ist eine vertrauenswürdige Einrichtung, die mit Hilfe kryptographischer Methoden Zertifikate erzeugt, verteilt und verwaltet. Im Rahmen der Erfindung erzeugt der Trustcenter 15 Zeitstempel, die einen kryptographisch gesicherten Nachweis für einen bestimmten Zeitpunkt darstellen. Die Zeitstempel werden so erzeugt, dass sie jeweils nur zu einer einzigen Chipkarte 2 passen. Dies kann beispielsweise dadurch erreicht werden, dass in die Erzeugung der Zeitstempel eine einzigartige Seriennummer der Chipkarte 2 eingeht.

Das Endgerät 16 kann beispielsweise als ein Point Of Sale (POS) Terminal oder als ein Mobilfunktelefon usw. ausgebildet sein und ist über eine Online-Verbindung mit dem Trustcenter 15 verbunden. Weiterhin besteht eine Datenverbindung zwischen dem Endgerät 16 und der Chipkarte 2. Diese Datenverbindung kann beispielsweise über eine berührende Kontaktierung der Chipkarte 2 durch das Endgerät 16 ausgebildet werden.

Wie in Fig. 3 dargestellt ist, wird zu einem Zeitpunkt t1 ein Zeitstempel ZS1 vom Trustcenter 15 über das Endgerät 16 an die Chipkarte 2 übertragen. Der Zeitstempel ZS1 stellt ein chipkartenindividuelles Zertifikat für den Zeitpunkt t1 dar. Nach Empfang des Zeitstempels ZS1 durch die Chipkarte 2 erfolgt in einer Protokolldatei, die im nichtflüchtigen Speicher 7 der Chipkarte 2 abgelegt ist ein neuer Eintrag. Der Eintrag in die Protokolldatei kann nur vom Betriebssystem 11 durchgeführt werden und enthält den Zeitstempel ZS1 und einen Zählerstand Z1 eines Zählers für die Anzahl der Schreibzugriffe auf den nichtflüchtigen Speicher 7 seit dem Zeitpunkt t1. Beispiele für den Eintrag können den Fig. 4 und 5 entnommen werden. Bei jedem Schreibzugriff auf den nichtflüchtigen Speicher 7 wird der Zähler entsprechend inkrementiert.

Zu einem Zeitpunkt t2 wird ein Zeitstempel ZS2, der ein chipkartenindividuelles Zertifikat für den Zeitpunkt t2 darstellt, vom Trustcenter 15 über das Endgerät 16 an die Chipkarte 2 übertragen. Die Chipkarte 2 geht nach Empfang des Zeitstempels ZS2 in analoger Weise vor, wie für den Zeitstempel ZS1 beschrieben. D. h. es erfolgt ein Eintrag in die Protokolldatei, der den Zeitstempel ZS2 und einen Zählerstand Z2 für die Anzahl der Schreibzugriffe auf den nichtflüchtigen Speicher 7 seit dem Zeitpunkt t2 enthält. Ab dem Zeitpunkt t2 wird der Zählerstand Z1 nicht mehr verändert. Der Zähler wird zum Zeitpunkt t2 zurückgesetzt und danach bei jedem Schreibzugriff auf den nichtflüchtigen Speicher 7 inkrementiert und demgemäß jeweils der Zählerstand Z2 aktualisiert.

In analoger Weise werden weitere Zeitstempel vom Trustcenter 15 an die Chipkarte 2 übermittelt und weitere Einträge in die Protokolldatei vorgenommen. Die Übermittlung der Zeitstempel kann in regelmäßigen Zeitabständen erfolgen oder jeweils durch ein vorgegebenes Ereignis ausgelöst werden, beispielsweise bei der Authentisierung der Chipkarte 2 durch das Netzwerk, bei Abschaltung des Mobilfunktelefons, in das die Chipkarte 2 eingesteckt ist, bei Bezahl- oder Aufladevorgängen usw.

Auf die beschriebene Weise wird im nichtflüchtigen Speicher 7 der Chipkarte 2 eine Protokolldatei geführt, die eine Vielzahl von Zeitstempeln enthält, denen jeweils ein Zählerstand für die Anzahl der Schreibzugriffe auf den nichtflüchtigen Speicher 7 zugeordnet ist.

Fig. 4 zeigt ein Ausführungsbeispiel für den Aufbau der Protokolldatei. Die Protokolldatei weist eine Vielzahl von Datensätzen auf, wobei in der Darstellung der Fig. 4 jede Zeile einem Datensatz entspricht. Jeder Datensatz weist einen Zeitstempel ZS1, ZS2 usw. und einen zugeordneten Zählerstand Z1, Z2 usw. auf.

Durch eine Auswertung der Protokolldatei kann auf zuverlässige Weise ermittelt werden, ob ab einem vorgegebenen Zeitpunkt Schreibzugriffe auf den nichtflüchtigen Speicher 7 stattgefunden haben. Hierzu ist lediglich der Datensatz der Protokolldatei zu ermitteln, dessen Zeitstempel dem vorgegebenen Zeitpunkt entspricht und zu prüfen, ob in diesem Datensatz oder in einem nachfolgenden Datensatz ein Zählerstand einen Wert aufweist, der größer als Null ist. Ist ein Zählerstand mit einem Wert größer als Null vorhanden, so hat nach dem vorgegebenen Zeitpunkt ein Schreibzugriff stattgefunden. Weisen die Zählerstände dagegen jeweils den Wert Null auf, so hat kein Schreibzugriff stattgefunden.

Falls in der Protokolldatei kein Zeitstempel vorhanden ist, der mit dem vorgegebenen Zeitpunkt übereinstimmt, kann auch mit dem Datensatz gestartet werden, der den nächst älteren Zeitstempel aufweist.

Probleme können sich bei dieser Vorgehensweise jedoch dann ergeben, wenn auf der Chipkarte 2 ein Fehlbedienungszähler implementiert ist, dessen aktueller Wert jeweils im nichtflüchtigen Speicher 7 abgelegt wird. Jede Änderung des Fehlbedienungszählers, die beispielsweise bei der Eingabe der persönlichen Geheimzahl erfolgen kann, löst einen Schreibzugriff im nichtflüchtigen Speicher 7 aus. Obwohl die sonstigen Daten des nichtflüchtigen Speichers 7 nicht geändert werden, wird bei jeder Änderung des Fehlbedienungszählers der Zähler für die Zugriffe auf den nichtflüchtigen Speicher 7 inkrementiert. Die daraus potentiell resultierenden Probleme können vermieden werden, wenn für die Protokolldatei der in Fig. 5 dargestellte Aufbau verwendet wird.

Fig. 5 zeigt ein weiteres Ausführungsbeispiel für den Aufbau der Protokolldatei. Analog zu Fig. 4 weist die Protokolldatei auch beim Ausführungsbeispiel gemäß Fig. 5 mehrere Datensätze auf, die wiederum als je eine Zeile dargestellt sind. Abweichend von Fig. 4 sind gemäß Fig. 5 pro Datensatz je ein Zeitstempel ZS, ein Zählerstand eines ersten Zählers Za und ein Zählerstand eines zweiten Zählers Zb vorgesehen. Zur besseren Anschaulichkeit sind diese Angaben in einer Kopfzeile aufgeführt und für den Zeitstempel ZS und die beiden Zähler Za, Zb in den folgenden Zeilen jeweils konkrete Werte eingetragen, wobei auch im Falle des Zeitstempels ZS jeweils Klartextwerte und keine Zertifikate dargestellt sind, um das Verständnis zu erleichtern. Tatsächlich sind in der Protokolldatei die Zeitstempel ZS nicht als Klartextwerte, sondern in Form von Zertifikaten abgelegt. Der erste Zähler Za zählt die Schreibzugriffe auf den nichtflüchtigen Speicher 7, die seit dem Zeitpunkt, der durch den Zeitstempel ZS angegeben wird, bezüglich des Fehlbedienungszählers durchgeführt wurden. Der zweite Zähler Zb zählt die sonstigen Schreibzugriffe auf den nichtflüchtigen Speicher 7, die nicht mit dem Fehlbedienungszähler zusammenhängen und seit dem Zeitpunkt des Zeitstempels ZS durchgeführt wurden.

Gemäß Fig. 5 wird zunächst ein Zeitstempel ZS in die Protokolldatei eingetragen, der ein Zertifikat für das Datum "1. Juni 2006" darstellt. Zeitlich vor dem Datensatz, in den der Zeitstempel ZS für das Datum "1. Juni 2006" eingetragen wird, kann bereits eine Vielzahl weiterer Datensätze angelegt worden sein, deren Inhalt in Fig. 5 jedoch nicht dargestellt ist. Nach Eintrag des Zeitstempels ZS für das Datum "1. Juni 2006" wird im selben Datensatz der erste Zähler Za bei jedem Schreibzugriff auf den nichtflüchtigen Speicher 7, der mit dem Fehlbedienungszähler zusammenhängt, inkrementiert. In analoger Weise wird der zweite Zähler Zb im selben Datensatz bei jedem Schreibzugriff auf den nichtflüchtigen Speicher 7, der nicht mit dem Fehlbedienungszähler zusammenhängt, inkrementiert.

Dies wird solange fortgesetzt, bis ein weiterer Zeitstempel ZS in den nächsten Datensatz der Protokolldatei eingetragen wird und damit der bisherige Datensatz abgeschlossen wird. Der weitere Zeitstempel ZS stellt ein Zertifikat des Datums "10. Juni 2006" dar. Beim Eintrag des weiteren Zeitstempels ZS weist der erste Zähler Za den Zählerstand "8" und der zweite Zähler Zb den Zählerstand "102" auf. Dies bedeutet, dass zwischen dem 1. Juni 2006 und dem 10. Juni 2006 im Zusammenhang mit dem Fehlbedienungszähler nachweislich 8 Schreibzugriffe auf den nichtflüchtigen Speicher 7 durchgeführt wurden. Im selben Zeitraum wurden 102 Schreibzugriffe ohne Beteiligung des Fehlbedienungszählers auf den nichtflüchtigen Speicher 7 durchgeführt.

Im Datensatz mit dem Zeitstempel ZS für das Datum "10. Juni 2006" weist der erste Zähler Za aktuell den Zählerstand "0" und der zweite Zähler Zb aktuell den Zählerstand "20" auf. Die beiden Zähler Za, Zb werden solange weiter inkrementiert, bis in den nachfolgenden Datensatz ein Zeitstempel ZS eingetragen wird. Gemäß der Darstellung der Fig. 5 ist im nachfolgenden Datensatz noch kein Zeitstempel ZS eingetragen.

## Patentansprüche

1. Tragbarer Datenträger, mit einer Prozessoreinheit (3) und einem wieder beschreibbaren nichtflüchtigen Speicher (7), wobei eine durch ein vorgegebenes Sperrereignis irreversibel aktivierbare Sperrfunktionalität (9) zur selektiven Sperrung von Schreibzugriffen auf den nichtflüchtigen Speicher (7) vorgesehen ist, derart dass Lesezugriffe auf in dem nichtflüchtigen Speicher (7) des tragbaren Datenträgers (2) gespeicherte Daten durch die Sperrung nicht unterbunden werden, **dadurch gekennzeichnet, dass**
solche Schreibzugriffe durch die selektive Sperrung nicht unterbunden werden, die eine vorgegebene Ausnahmebedingung erfüllen, wobei die vorgegebene Ausnahmebedingung beim Einschreiben eines Werts für einen Fehlbedienungszähler erfüllt ist.

2. Tragbarer Datenträger nach Anspruch 1, **dadurch gekennzeichnet, dass** die Sperrfunktionalität (9) vom Inhaber des tragbaren Datenträgers (2) aktivierbar ist.

3. Tragbarer Datenträger nach einem der vorhergehenden Ansprüche, **dadurch gekennzeichnet, dass** die Sperrfunktionalität (9) von einem Dienstanbieter aktivierbar ist, zu dessen Diensten mittels des tragbaren Datenträgers (2) Zugang erlangt werden kann.

4. Tragbarer Datenträger nach einem der vorhergehenden Ansprüche, **dadurch gekennzeichnet, dass** für die Aktivierung der Sperrfunktionalität (9) eine korrekte Eingabe einer Geheiminformation erforderlich ist.

5. Tragbarer Datenträger nach einem der vorhergehenden Ansprüche, **dadurch gekennzeichnet, dass** für die Aktivierung der Sperrfunktionalität (9) eine erfolgreiche Authentisierung erforderlich ist.

6. Tragbarer Datenträger nach einem der vorhergehenden Ansprüche, **dadurch gekennzeichnet, dass** die Sperrfunktionalität (9) mittels einer Software realisiert ist.

7. Tragbarer Datenträger nach einem der vorhergehenden Ansprüche, **dadurch gekennzeichnet, dass** die Sperrfunktionalität (9) ein Bestandteil eines Betriebssystems (11) des tragbaren Datenträgers (2) ist.

8. Tragbarer Datenträger nach einem der vorhergehenden Ansprüche, **dadurch gekennzeichnet, dass** die Sperrfunktionalität (9) einen Zugriff auf eine Schreibroutine (13), mit der ein Schreibzugriff auf den nichtflüchtigen Speicher (7) durchführbar ist, einschränkt.

9. Tragbarer Datenträger nach einem der vorhergehenden Ansprüche, **dadurch gekennzeichnet, dass** eine Zeitangabe kryptographisch gesichert ist.

10. Tragbarer Datenträger nach einem der vorhergehenden Ansprüche, **dadurch gekennzeichnet, dass** eine Protokollfunktionalität für einen Empfang einer Zeitangabe von einer vertrauenswürdigen Einrichtung (5) ausgelegt ist.

11. Tragbarer Datenträger nach einem der vorhergehenden Ansprüche, **dadurch gekennzeichnet, dass** eine Protokollfunktionalität die Anzahl der Schreibzugriffe auf den nichtflüchtigen Speicher (7) jeweils seit einer letzten Zeitangabe protokolliert.

12. Tragbarer Datenträger nach einem der vorhergehenden Ansprüche, **dadurch gekennzeichnet, dass** eine Protokollfunktionalität wenigstens zwei Kategorien von Schreibzugriffen auf den nichtflüchtigen Speicher (7) separat protokolliert.

13. Tragbarer Datenträger nach Anspruch 12, **dadurch gekennzeichnet, dass** eine Kategorie von Schreibzugriffen auf den nichtflüchtigen Speicher (7) Schreibzugriffe betrifft, die bei Erfüllung der vorgegebenen Ausnahmebedingung durchgeführt werden.

14. Tragbarer Datenträger nach einem der vorhergehenden Ansprüche, **dadurch gekennzeichnet, dass** er als eine Chipkarte ausgebildet ist.

15. Verfahren zum Betreiben eines tragbaren Datenträgers (2), der eine Prozessoreinheit (3) und einen wieder beschreibbaren nichtflüchtigen Speicher (7) aufweist, **dadurch gekennzeichnet, dass** Schreibzugriffe auf den nichtflüchtigen Speicher (7) auf ein vorgegebenes Sperrereignis hin irreversibel und selektiv derart gesperrt werden,
dass Schreibzugriffe, die eine vorgegebene Ausnahmebedingung erfüllen und Lesezugriffe durch die Sperrung nicht unterbunden werden, wobei die vorgegebene Ausnahmebedingung beim Einschreiben eines Werts für einen Fehlbedienungszähler erfüllt ist.

## Claims

1. Portable data carrier having a processor unit (3) and a re-writable non-volatile memory (7), wherein a locking functionality (9) for selectively locking write access operations to the non-volatile memory (7) is provided, the locking functionality (9) being activatable irreversibly by a predetermined locking event, such that read access operations on data stored in the non-volatile memory (7) of the portable data carrier (2) are not prevented by the locking, **characterised in that**
write access operations which meet a predetermined exception condition are not prevented by the selective locking, wherein the predetermined exception condition is fulfilled when writing a value for a retry counter.

2. The portable data carrier according to claim 1, **characterised in that** the locking functionality (9) is activatable by the owner of the portable data carrier (2).

3. The portable data carrier according to any one of the preceding claims, **characterised in that** the locking functionality (9) is activatable by a service provider, the services of which can be accessed by means of the portable data carrier (2).

4. The portable data carrier according to any one of the preceding claims, **characterised in that** a correct entry of secret information is necessary for activating the locking functionality (9).

5. The portable data carrier according to any one of the preceding claims, **characterised in that** a successful authentication is necessary for activating the locking functionality (9).

6. The portable data carrier according to any one of the preceding claims, **characterised in that** the locking functionality (9) is implemented by means of software.

7. The portable data carrier according to any one of the preceding claims, **characterised in that** the locking functionality (9) is a component of an operating system (11) of the portable data carrier (2).

8. The portable data carrier according to any one of the preceding claims, **characterised in that** the locking functionality (9) restricts access to a write routine (13) by means of which a write access operation to the non-volatile memory (7) can be performed.

9. The portable data carrier according to any one of the preceding claims, **characterised in that** a time indication is cryptographically secured.

10. The portable data carrier according to any one of the preceding claims, **characterised in that** a protocol functionality is configured for receiving a time indication from a trusted unit.

11. The portable data carrier according to any one of the preceding claims, **characterised in that** a protocol functionality protocols the number of write access operations to the non-volatile memory (7) since a respective latest time indication.

12. The portable data carrier according to any one of the preceding claims, **characterised in that** a protocol functionality separately protocols at least two categories of write access operations to the non-volatile memory (7).

13. Portable data carrier according to claim 12, **characterised in that** a category of write access operations to the non-volatile memory (7) concerns write access operations that are performed when the predetermined exception condition is fulfilled.

14. The portable data carrier according to any one of the preceding claims, **characterised in that** the portable data carrier is designed as a smart card.

15. A method for operating a portable data carrier (2) comprising a processor unit (3) and a re-writable non-volatile memory (7), **characterised in that** write access operations to the non-volatile memory (7) are irreversibly and selectively locked in response to a predetermined locking event such that write access operations which fulfil a predetermined exception condition, and read access operations, are not prevented by the locking, wherein the predetermined exception condition is fulfilled when writing a value for a retry counter.

## Revendications

1. Support de données portable, comprenant une unité de traitement (3) et une mémoire non volatile réinscriptible (7), dans lequel il est prévu une fonctionnalité de verrouillage (9) pouvant être activée de manière irréversible par un événement de verrouillage prédéterminé pour verrouiller de manière sélective des accès en écriture à la mémoire non volatile (7) de telle manière que des accès en lecture à des données stockées dans la mémoire non volatile (7) du support de données portable (2) ne soient pas inhibés par le verrouillage, **caractérisé en ce que** les accès en écriture qui satisfont à une condition d'exception prédéterminée ne sont pas inhibés par le verrouillage sélectif, la condition d'exception prédéterminée étant remplie lors de l'écriture d'une valeur d'un compteur de défaut de fonctionnement.

2. Support de données portable selon la revendication 1, **caractérisé en ce que** la fonctionnalité de verrouillage (9) peut être activée par le propriétaire du support de données portable (2).

3. Support de données portable selon l'une quelconque des revendications précédentes, **caractérisé en ce que** la fonctionnalité de verrouillage (9) peut être activée par un fournisseur de services dont les services peuvent faire l'objet d'un accès au moyen du support de données portable (2).

4. Support de données portable selon l'une quelconque des revendications précédentes, **caractérisé en ce que** pour activer la fonctionnalité de verrouillage (9), une saisie correcte d'une information secrète est nécessaire.

5. Support de données portable selon l'une quelconque des revendications précédentes, **caractérisé en ce que** pour activer la fonctionnalité de verrouillage (9), une authentification réussie est nécessaire.

6. Support de données portable selon l'une quelconque des revendications précédentes, **caractérisé en ce que** la fonctionnalité de verrouillage (9) est réalisée au moyen d'un logiciel.

7. Support de données portable selon l'une quelconque des revendications précédentes, **caractérisé en ce que** la fonctionnalité de verrouillage (9) fait partie d'un système d'exploitation (11) du support de données portable (2).

8. Support de données portable selon l'une quelconque des revendications précédentes, **caractérisé en ce que** la fonctionnalité de verrouillage (9) limite un accès à un sous-programme d'écriture (13) au moyen duquel un accès en écriture à la mémoire non volatile (7) peut être effectué.

9. Support de données portable selon l'une quelconque des revendications précédentes, **caractérisé en ce qu'**une indication de temps est assurée de manière cryptographique.

10. Support de données portable selon l'une quelconque des revendications précédentes, **caractérisé en ce qu'**une fonctionnalité de protocole est configurée pour la réception d'une indication de temps d'un dispositif de confiance (5).

11. Support de données portable selon l'une quelconque des revendications précédentes, **caractérisé en ce qu'**une fonctionnalité de protocole établit un protocole des accès en écriture à la mémoire non volatile (7) depuis une dernière indication de temps.

12. Support de données portable selon l'une quelconque des revendications précédentes, **caractérisé en ce qu'**une fonctionnalité de protocole établit de manière séparée un protocole pour au moins deux catégories d'accès en écriture à la mémoire non volatile (7).

13. Support de données portable selon la revendication 12, **caractérisé en ce qu'**une catégorie d'accès en écriture à la mémoire non volatile (7) concerne des accès en écriture qui sont effectués lorsque la condition d'exception prédéterminée est satisfaite.

14. Support de données portable selon l'une quelconque des revendications précédentes, **caractérisé en ce qu'**il est réalisé sous la forme d'une carte à puce.

15. Procédé de mise en oeuvre d'un support de données portable (2) comprenant une unité de traitement (3) et une mémoire non volatile réinscriptible (7), **caractérisé en ce que** des accès en écriture à la mémoire non volatile (7) sont verrouillés de manière irréversible et sélective lors d'un événement de verrouillage prédéterminé de telle manière que des accès en écriture qui satisfont à une condition d'exception prédéterminée et des accès en lecture ne soient pas inhibés par le verrouillage, la condition d'exception prédéterminée étant satisfaite lors de l'écriture d'une valeur d'un compteur de défaut de fonctionnement.
